# EUROPEAN PATENT APPLICATION

(11) **EP 4 831 323 A1**
(43) Date of publication of application: **28.10.2026**
(21) Application number: 24907962.5
(22) Date of filing: 10.12.2024
(51) Int. Cl.: C22C 30/02, C22B 7/00, C22B 1/00, H01M 10/54

(54) **VALUABLE METAL RECOVERY ALLOY AND METHOD FOR RECOVERING VALUABLE METAL**

(30) Priority: 18.12.2023 KR 20230185145
(71) Applicant: POSCO Holdings Inc., Pohang-si, Gyeongsangbuk-do 37859 (KR)
(72) Inventor: PARK, Chonglyuck, Pohang-si, Gyeongsangbuk-do 37859 (KR); PARK, Joongkil, Pohang-si, Gyeongsangbuk-do 37859 (KR); KIM, Wanyi, Pohang-si, Gyeongsangbuk-do 37859 (KR); HAN, Sangwoo, Pohang-si, Gyeongsangbuk-do 37859 (KR); LEE, Juseung, Pohang-si, Gyeongsangbuk-do 37859 (KR); PARK, Junyong, Pohang-si, Gyeongsangbuk-do 37859 (KR)
(74) Representative: Pfenning, Meinig & Partner mbB
(86) International application number: PCT/KR2024/020215
(87) International publication number: WO 2025/135678

(57) **Abstract**

The present invention relates to an alloy for recovering valuable metals, a composition for recovering valuable metals, and a method for recovering valuable metals. The alloy for recovering valuable metals includes, based on 100 wt% of an entire composition of the alloy, valuable metals in an amount of 45 wt% or more and impurities as a balance, and satisfies the following Formula 1. <Formula 1> $5.0 \leq Cu / Ni \leq 15.0 %$

## Description

### [TECHNICAL FIELD]

The present invention relates to waste batteries, and more particularly, to an alloy for recovering valuable metals recovered from waste batteries and a method for recovering valuable metals.

### [BACKGROUND ART]

As demand for electric vehicles is becoming active worldwide, the issue of treating waste batteries generated from the electric vehicles is emerging as a social issue. In the case of lithium secondary batteries, which are a main raw material of the waste batteries, organic solvents, explosive materials, and heavy metal materials such as Ni, Co, Mn, and Fe are contained therein. However, Ni, Co, Mn, and Li have great scarcity value as valuable metals, and recovery and recycling processes after lithium secondary batteries are discarded are emerging as important research fields.

Specifically, a lithium secondary battery mainly includes copper and aluminum used as current collectors, Li-, Ni-, Co-, and Mn-containing oxides constituting a positive electrode material, and graphite used as a negative electrode material, and includes a separator for separating the positive electrode material and the negative electrode material and an electrolyte solution injected into the separator. Solvents constituting the electrolyte solution and solvents used as salts are mainly used by mixing carbonate-based organic materials such as ethylene carbonate and propylene carbonate, and for example, LiPF₆ is used.

As described above, a lithium secondary battery is composed of heavy metal materials such as Ni-Co-Mn-Fe, carbon, and other electrolyte materials, and among these, Ni, Co, Mn, and Li have value as valuable metals.

Recycling for recovery for battery raw materials may generally recover valuable metals through battery disassembly, discharging, shredding, heat treatment, recovery, and a wet process. In the case of the discharging, saltwater discharging is performed, and at this time, materials such as Na, K, Mg, Ca, and Cl introduced therein are included as impurities in the recovered raw material.

After heat treatment, products formed in the recovered material differ depending on the heat treatment temperature. When heat treatment is performed at a temperature of 600°C or less, the recovered material is called black powder and is in a powder form in which Ni-Co-Mn-Li oxides and carbon of the negative electrode material are mixed, and Al and Cu may be included in extremely small amounts because they are removed in advance.

When the black powder is heat-treated at a high temperature of 1,000°C or higher, metal oxides are reduced by the carbon of the negative electrode material and alloyed, thereby obtaining a black alloy containing such alloy components, carbon, and other materials. From the thus obtained black alloy, materials such as a valuable metal alloy, lithium oxide, and graphite may be recovered by material. At this time, the valuable metal alloy in a metal form is coated with lithium aluminate or lithium oxide, and the black alloys are finally converted into raw materials through an additional process such as leaching.

At this time, by controlling the content of components in the recovered valuable metal alloy, efficiency of a subsequent wet smelting process is increased, and process costs are reduced.

### [DETAILED DESCRIPTION OF THE INVENTION]

### [Technical Problem]

A technical problem to be solved by the present invention is to provide an alloy for recovering valuable metals, which can increase process efficiency and reduce process costs when a raw material of a valuable metal alloy obtained from waste batteries is introduced into and used in a wet smelting process using an acid or a base.

Another technical problem to be solved by the present invention is to provide a method for recovering valuable metals, which manufactures an alloy for recovering valuable metals having the above-described advantages.

### [Technical Solution]

According to one embodiment of the present invention, an alloy for recovering valuable metals includes, based on 100 wt% of an entire composition of the alloy, valuable metals in an amount of 45 wt% or more and impurities as a balance, and satisfies the following Formula 1. <Formula 1> $5.0 \leq \left[Cu\right] / \left[Ni\right] \leq 15.0 %$

In Formula 1, [Cu] and [Ni] mean contents of Cu and Ni in the alloy for recovering valuable metals, respectively.

In one embodiment, the alloy for recovering valuable metals satisfies the following Formula 2. <Formula 2> $30.0 \leq \left[Cu\right] / \left[Mn\right] \leq 55.0 %$

In Formula 2, [Cu] and [Mn] mean contents of Cu and Mn in the alloy for recovering valuable metals, respectively.

In one embodiment, the alloy for recovering valuable metals satisfies the following Formula 3. <Formula 3> $50.0 \leq \left[Cu\right] / \left[C\right] \leq 200.0 %$

In Formula 3, [Cu] and [C] mean contents of Cu and C in the alloy for recovering valuable metals, respectively.

In one embodiment, the alloy for recovering valuable metals includes a CuNi alloy. In one embodiment, the alloy for recovering valuable metals may have, as XRD peak values, at least one diffraction peak among 2θ = 44°±1°, 2θ = 51.5°±1.5°, and 2θ = 75.5°±1.5°.

In one embodiment, the alloy for recovering valuable metals may include copper (Cu) having a content of 0.02 to 5.00 wt% or less based on 100 wt% of the alloy for recovering valuable metals. In one embodiment, the alloy for recovering valuable metals may include carbon (C) having a content of 5.0 wt% or less based on 100 wt% of the alloy for recovering valuable metals.

According to another embodiment of the present invention, a method for recovering valuable metals may include preparing a battery in a cell unit or battery shredded material; performing dry heat treatment in a temperature range of 1,150 to 1,400°C without passing through a melting step of the battery or the shredded material; and magnetically separating and recovering, from the dry heat-treated result, a magnetic alloy for recovering valuable metals at a magnetic force intensity of 800 to 4,500 G.

In one embodiment, the dry heat treatment may be performed in an atmosphere having an oxygen content of 5% or less. In one embodiment, the dry heat treatment may include performing the dry heat treatment in multiple stages, and the performing in multiple stages may include a preliminary heat treatment step and a high-temperature heat treatment step performed at a temperature higher than that of the preliminary heat treatment step.

In one embodiment, the preliminary heat treatment step may be performed at a temperature of 900°C or lower, and a temperature increase rate of the preliminary heat treatment step may be 5 to 15°C/min. In one embodiment, the high-temperature heat treatment step may be performed at 900°C or higher, and a temperature increase rate of the high-temperature heat treatment step may be 2.5 to 7.5°C/min.

In one embodiment, after the high-temperature heat treatment step, the method includes a cooling step, and the cooling step is performed at a cooling rate of 20°C/min or higher. The high-temperature heat treatment step may be performed at 900°C or higher. In one embodiment, the step of magnetically separating and recovering the alloy for recovering valuable metals may be performed in a wet manner.

In one embodiment, the step of magnetically separating and recovering the alloy for recovering valuable metals may be performed in a range in which a pulp density indicating a concentration of solids is 10 to 50%. In one embodiment, in the result obtained from the dry heat treatment step, a lithium compound bonded to a part of a surface of the alloy for recovering valuable metals may be separated by external force.

In one embodiment, the step of preparing the battery in a cell unit or the battery shredded material may include pretreating the battery in a cell unit or the battery shredded material.

### [Advantageous Effects]

In the alloy for recovering valuable metals according to one embodiment of the present invention, by controlling component contents of Cu and Ni, alloy particles are easily pulverized by external force in a subsequent wet smelting process, so that the diameter of the alloy is decreased and the specific surface area is increased at the same time, thereby improving reactivity to sulfuric acid leaching. In addition, a carbon layer is disposed on the surface or inside the valuable metal alloy, thereby providing an advantage in that lithium can be selectively leached from lithium oxide on the alloy surface.

The method for recovering valuable metals according to another embodiment of the present invention may provide a method for manufacturing an alloy for recovering valuable metals having the above-described advantages by controlling heat treatment and cooling conditions.

### [BRIEF DESCRIPTION OF THE DRAWINGS]

FIG. 1 is an SEM photograph of a composition for recovering valuable metals according to one embodiment of the present invention.
FIGS. 2A and 2B show XRD analysis results of a composition for recovering valuable metals according to one embodiment.
FIG. 3 shows XRD analysis results regarding a change in state of Cu in a composition for recovering valuable metals according to one embodiment.
FIGS. 4A and 4B show a melting process of copper foil (Cu foil) in a heat treatment step of battery shredded material of the present invention.

### [MODE FOR CARRYING OUT THE INVENTION]

Terms such as first, second, and third are used to describe various parts, components, regions, layers, and/or sections, but are not limited thereto. These terms are used only to distinguish one part, component, region, layer, or section from another part, component, region, layer, or section. Accordingly, a first part, component, region, layer, or section described below may be referred to as a second part, component, region, layer, or section without departing from the scope of the present invention.

The terminology used herein is merely for referring to particular embodiments and is not intended to limit the present invention. As used herein, singular forms also include plural forms unless the context clearly indicates otherwise. As used in the specification, the term "comprising" specifies stated features, regions, integers, steps, operations, elements, and/or components, and does not exclude the presence or addition of other features, regions, integers, steps, operations, elements, and/or components.

When a part is referred to as being "above" or "on" another part, it may be directly above or on the other part, or another part may be interposed therebetween. In contrast, when a part is referred to as being "directly above" another part, no other part is interposed therebetween.

In addition, in the present specification, % means wt% unless otherwise specified.

Although not otherwise defined, all terms used herein, including technical and scientific terms, have the same meanings as commonly understood by a person having ordinary skill in the art to which the present invention pertains. Terms defined in commonly used dictionaries are further interpreted as having meanings consistent with the related technical literature and the presently disclosed content, and unless defined otherwise, are not interpreted in an idealized or overly formal sense.

Hereinafter, embodiments of the present invention will be described in detail. However, these are presented as examples, and the present invention is not limited thereby, and the present invention is defined only by the scope of claims to be described below.

According to one embodiment of the present invention, a valuable metal alloy may include, based on 100 wt% of an entire composition of the alloy, valuable metals in an amount of 45 wt% or more and impurities as a balance. The alloy for recovering valuable metals may include at least one of valuable metals such as nickel (Ni), cobalt (Co), manganese (Mn), lithium (Li), carbon (C), aluminum (Al), and copper (Cu), and residual impurities. In the present specification, valuable metals may mean expensive metal components included in a battery, and may mean nickel, cobalt, manganese, aluminum, copper, and lithium. In one embodiment, the valuable metals may be 70 wt% or more.

In one embodiment, the alloy for recovering valuable metals may satisfy the following Formula 1. <Formula 1> $5.0 \leq \left[Cu\right] / \left[Ni\right] \leq 15.0 %$

In Formula 1, [Cu] and [Ni] mean contents of Cu and Ni in the alloy for recovering valuable metals, respectively.

Formula 1 means a content of copper relative to nickel in the alloy for recovering valuable metals, expressed as a percentage, and the value of Formula 1 may be 5.0 to 15.0%. Specifically, Formula 1 may be 5 to 15%, and more specifically 10 to 14.5%. By satisfying the above-described range of Formula 1, there are advantages in that time and process costs required for impurity removal in a wet smelting process can be reduced and the recovery rate of Ni recovered as a magnetic material can be maximized.

When Formula 1 is outside the upper limit of the above-described range, the reaction temperature is high during a high-temperature reduction reaction, so that process costs for maintaining the temperature may increase, and there may be problems such as an increase in time and costs for removing Cu in a process of leaching the alloy and removing impurities. On the other hand, there is a problem in that a part of an NCM alloy is not recovered due to weak magnetic force during magnetic separation.

When Formula 1 is outside the lower limit of the above-described range, the reaction temperature during high-temperature reduction is low, and thus NCM may not be completely reduced and may remain in an oxide form. In addition, since the NCM oxide is a non-magnetic material, the Ni wt% of the NCM alloy recovered as a magnetic product increases, but there is a problem that the recovery rate decreases. On the other hand, due to an excessively strong magnetic force of a magnetic separator, not only the ferromagnetic NCM alloy but also paramagnetic materials and weakly magnetic materials are recovered, thereby increasing impurity contents of the magnetic material recovered as the NCM alloy.

In one embodiment, the alloy for recovering valuable metals may satisfy the following Formula 2. <Formula 2> $30.0 \leq \left[Cu\right] / \left[Mn\right] \leq 55.0 %$

In Formula 2, [Cu] and [Mn] mean contents of Cu and Mn in the alloy for recovering valuable metals, respectively.

Formula 2 means a content of copper relative to manganese in the alloy for recovering valuable metals, expressed as a percentage, and the value of Formula 2 may be 30.0 to 55.0%. Specifically, Formula 2 may be 35.0 to 48.0%, and more specifically 40.0 to 46.0%. By satisfying the above-described range of Formula 2, there is an advantage that the recovery rate of Mn as a magnetic product recovered through magnetic separation can be maximized.

When Formula 2 is outside the upper limit of the above-described range, there is a problem that the recovery rate of Mn decreases. When Formula 2 is outside the lower limit of the above-described range, although the wt% grade of Mn increases, as in the case of Cu/Ni of Formula 1, the recovery rate of Mn decreases and impurity contents increase.

In one embodiment, the alloy for recovering valuable metals may satisfy the following Formula 3. <Formula 3> $50.0 \leq \left[Cu\right] / \left[C\right] \leq 200.0 %$

In Formula 3, [Cu] and [C] mean contents of Cu and C in the alloy for recovering valuable metals, respectively.

Formula 3 means a content of copper relative to carbon in the alloy for recovering valuable metals, expressed as a percentage, and the value of Formula 3 may be 50.0 to 200.0%. Specifically, Formula 3 may be 85 to 150%, more specifically 100 to 150%, and still more specifically 108 to 142%. By satisfying the above-described range of Formula 3, there is an advantage that the NCM alloy can be stably recovered with a high recovery rate and grade.

When Formula 3 is outside the upper limit of the above-described range, if the Cu content is excessively high, it means that the reaction temperature during high-temperature reduction is very high, causing a problem of increased process costs. Conversely, if the C content is excessively low, it means that the reaction temperature during high-temperature reduction is very low and that C could not be carburized into grain boundaries of NCM. In this case, NCM is not completely reduced and partially remains as an oxide, thereby decreasing the recovery rate of the NCM alloy. When Formula 3 is outside the lower limit of the above-described range, problems opposite to those described above in the case of exceeding the upper limit may occur.

In one embodiment, the alloy for recovering valuable metals may include copper (Cu) in an amount of 0.02 wt% to 5.00 wt% based on 100 wt% of the valuable metal alloy. Specifically, the alloy for recovering valuable metals may include copper in a range of 0.1 to 15 wt%.

When the copper content is outside the upper limit of the above range, there is a problem of process costs due to increased precipitation of CuSO₄ in leaching and solvent extraction, and when the copper content is outside the lower limit of the above range, there is a problem of an increase in unreacted materials because formation of low-melting-point Ni-Co-Mn is difficult.

In one embodiment, the alloy for recovering valuable metals may include aluminum (Al) in a range of 0.25 to 30 wt%. Specifically, the aluminum (Al) may be 1.0 to 15.0 wt%, and more specifically 8.0 to 9.5 wt%. When the aluminum content is outside the upper limit of the above range, there is a problem of a decrease in recovery rates of Ni and Co during leaching and solvent extraction processes, and when the aluminum content is outside the lower limit of the above range, formation of LiAlO₂ is difficult, thereby causing a problem of a decrease in Li recovery rate.

In one embodiment, the alloy for recovering valuable metals may include carbon (C) in an amount of 5.0 wt% or less. Specifically, carbon may be included in an amount of 2.80 to 4.0 wt%, and more specifically 2.96 to 3.84 wt%. By satisfying the above-described range of the carbon content, there is an advantage that a carburized layer can be formed in the valuable metal alloy and pulverization is easy in a subsequent process, thereby increasing the recovery rate of valuable metals.

When the carbon content is outside the upper limit of the above-described range, there is a problem that carbon is not easily separated in a subsequent process. When the carbon content is outside the lower limit of the above-described range, it is difficult to form a carburized layer, thereby causing a problem that carbon is difficult to separate from the alloy.

In one embodiment, the valuable metal alloy may include a Cu-Ni alloy. Specifically, the valuable metal alloy may include an alloy in which copper and nickel are bonded.

In one embodiment, the alloy for recovering valuable metals may include, as XRD peak values, at least one of peak intensity values of 51.5°±1.5° and 75.5°±1.5°. The peak intensity values appear because the alloy includes a Cu-Ni alloy, and the Cu-Ni may appear as copper is melted and remains in the valuable metal alloy in a high-temperature heat treatment step in the method for recovering valuable metals and, at the same time, is bonded to nickel and alloyed.

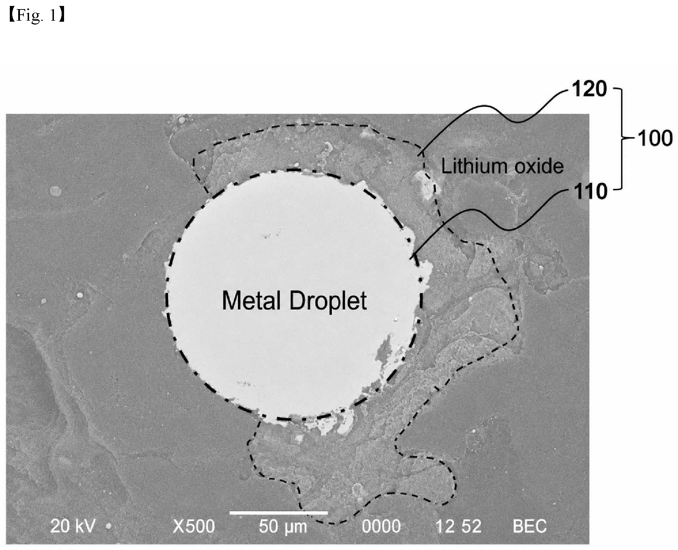

FIG. 1 is an SEM photograph of a composition for recovering valuable metals constituting a valuable metal recovery composition according to one embodiment of the present invention.

In one embodiment, the composition 100 for recovering valuable metals may include a core portion 110 including valuable metals and a shell portion 120 disposed on at least a part of the core portion 110. Specifically, the composition 100 for recovering valuable metals may be composed of, in the core portion 110, metals such as valuable metals including Ni, Co, or Mn, and an oxide including lithium may be bonded and disposed on the core portion 110.

The core portion 110 includes an alloy for recovering valuable metals, and the alloy for recovering valuable metals may include, based on 100 wt% of an entire composition of the alloy, valuable metals in an amount of 45 wt% or more and impurities as a balance. The alloy for recovering valuable metals may include at least one of valuable metals such as nickel (Ni), cobalt (Co), manganese (Mn), lithium (Li), carbon (C), aluminum (Al), and copper (Cu), and residual impurities. In the present specification, valuable metals may mean expensive metal components included in a battery, and may mean nickel, cobalt, manganese, aluminum, copper, and lithium. In one embodiment, the valuable metals may be 70 wt% or more. Detailed descriptions of the alloy for recovering valuable metals of the core portion may refer to those described above.

In one embodiment, in the composition 100 for recovering valuable metals, unlike Ni, Co, and Mn, lithium in the composition 100 for recovering valuable metals may not be reduced to form an alloy, and may be combined with an Al component in the battery to form a lithium oxide.

In one embodiment, the composition 100 for recovering valuable metals may include a shell portion 120 disposed on the core portion 110. The shell portion 120 may be a lithium oxide disposed on the core portion 110.

The lithium oxide may include, for example, a lithium-aluminum oxide. The lithium-aluminum oxide may be a lithium-aluminum compound. In the lithium-aluminum oxide, lithium and aluminum included in the composition may be physically or chemically bonded to each other and bonded as an oxide.

In one embodiment, the lithium oxide may include LiAlO₂, Li₅AlO₄, Li₂CO₃, and LiF. LiAlO₂, Li₅AlO₄, and Li₂CO₃ correspond to lithium oxides reacted in a high-temperature reduction reaction process of battery shredded material, and LiF may be a lithium oxide detected due to a residual amount of electrolyte depending on the degree of pretreatment.

In one embodiment, the lithium compound may include, as XRD peaks, at least one of 2θ of 20.5 to 21.5°, 29.0 to 29.5°, 31.5 to 32.0°, 32.2 to 33.0°, 60.5 to 61.5°, 70.0 to 72.0°, 19.5 to 20.2°, 21.6 to 22.2°, 24.0 to 26.0°, 27.0 to 29.0°, 34.0 to 36.0°, 37.0 to 39.0°, 38.2 to 39.5°, 44.0 to 46.0°, 64.5 to 66.5°, and 77.77 to 79.77°.

In one embodiment, LiAlO₂ may include, as XRD peaks, at least one of 20.5 to 21.5°, 29.0 to 29.5°, 31.5 to 32.0°, 32.2 to 33.0°, 60.5 to 61.5°, and 70.0 to 72.0°. Li₅AlO₄ may include, as XRD peaks, at least one of 19.5 to 20.2° and 21.6 to 22.2°.

The Li₂CO₃ composition may include, as XRD peaks, at least one of 24.0 to 26.0°, 27.0 to 29.0°, 34.0 to 36.0°, and 37.0 to 39.0°. The LiF composition may include, as XRD peaks, at least one of 38.2 to 39.5°, 44.0 to 46.0°, 64.5 to 66.5°, and 77.77 to 79.77°.

As described above, the composition 100 for recovering valuable metals has an XRD peak value of at least one of LiAlO₂, Li₅AlO₄, Li₂CO₃, and LiF, and thus it can be confirmed that a lithium compound is attached and disposed on the core portion including valuable metals.

In one embodiment, the lithium compound partially bonded to the surface of the alloy for recovering valuable metals may be separated using a wet process. In another embodiment, the lithium compound may be separated from the alloy for recovering valuable metals by mechanical or physical external force. As described above, since not only the alloy for recovering valuable metals can be recovered from the composition 100 for recovering valuable metals but also the lithium compound can be separated at the same time, the recovery rate of lithium is high, thereby reducing the amount of lost lithium.

In one embodiment, the composition 100 for recovering valuable metals may include aluminum (Al) in an amount of 1 to 30 wt%. Specifically, the aluminum may be included in an amount of 1.1 to 15.0 wt%. By satisfying the above range of the aluminum content, a lithium compound can be formed through physical or chemical bonding with lithium, and as the lithium compound is separated later, there is an advantage that the yield of lithium can be increased.

When the aluminum content is outside the upper limit of the above range, there are problems of increased costs of Ni and Co solvent extraction and crystallization processes and a decrease in recovery rates of Ni and Co due to excessive generation of Al₂(SO₄)₃ in leaching and solvent extraction processes. When the aluminum content is outside the lower limit of the above range, there is a problem that generation of Li-Al-O oxide is inferior due to insufficient aluminum content.

In one embodiment, the composition 100 for recovering valuable metals includes aluminum (Al), and the aluminum (Al) may have a concentration gradient that gradually increases from an interface between the core portion 110 and the shell portion 120 toward the shell portion 120. The reason why the concentration gradient of aluminum (Al) increases toward the shell portion 120 is that an oxide including aluminum is attached to the core portion 110 including the alloy for recovering valuable metals.

In one embodiment, the method for recovering valuable metals may include preparing battery shredded material, dry heat-treating the shredded material, and recovering a valuable metal alloy from the heat-treated result. The method may be a method for manufacturing an alloy having a high concentration content of the alloy for recovering valuable metals, and in particular, may be a method for manufacturing an alloy having a higher concentration content of valuable metals than black powder that has undergone an initial shredding step. In addition, the alloy for recovering valuable metals manufactured through the manufacturing method is the same within a range not inconsistent with the above-described FIG. 1.

The step of preparing battery shredded material is a step of preparing by shredding a material serving as a base material of the battery shredded material, or preparing the shredded material itself. The base material of the battery shredded material may include a battery that has reached the end of its life, scraps constituting the waste battery, a jelly roll, and positive electrode materials such as slurry, defective products generated in a manufacturing process, residues inside the manufacturing process, and waste cells such as generated debris, for example, waste materials in a manufacturing process of a lithium ion battery. The shredded material itself may be, for example, a product that has been shredded, such as black powder.

In one embodiment, when the step of preparing a battery in a cell unit or battery shredded material is a step of preparing by shredding the material serving as the base material of the battery shredded material, the step may include shredding the material serving as the base material of the battery shredded material. A pulverized material may be obtained by shredding the base material of the battery shredded material using a shredder. As a non-limiting example, the shredding may include crushing the waste battery by applying physical or mechanical force and pulverizing it into fine powder.

The shredding step may separate some large-sized impurities among impurities such as aluminum (Al), copper (Cu), iron (Fe), and plastic in components included in the waste battery. A state in which the large impurities are separated is called black powder, and battery shredded material such as black powder may be manufactured through the shredding step.

In one embodiment, the battery shredded material may include aluminum (Al), manganese (Mn), lithium (Li), copper (Cu), cobalt (Co), nickel (Ni), carbon (C), and residual impurities. In one embodiment, the black powder includes, in the case of nickel (Ni), 5 to 40 wt%, in the case of cobalt (Co), 1 to 20 wt%, in the case of manganese (Mn), 1 to 15 wt%, in the case of lithium (Li), 0.5 to 5 wt%, in the case of carbon (C), 10 to 70 wt%, in the case of aluminum (Al), 0.0001 to 20 wt%, and in the case of copper (Cu), 0.0001 to 20 wt%, and the total amount of impurities such as iron (Fe) and phosphorus (P) may be less than 10 wt%. The components of the black powder may vary according to a ratio of nickel, cobalt, and manganese, and when a lithium secondary battery is shredded, the nickel, cobalt, and manganese may be adjusted by the positive electrode material oxide in the lithium secondary battery.

In one embodiment, the step of shredding the material serving as the base material of the battery shredded material may be a shredding method using at least one of shearing, compression, and tensile force. Specifically, the shredding step may be performed, for example, by at least one of a hammer mill, a ball mill, and an stirred ball mill. In the hammer mill, at least one step of disassembly, punching, and milling may be performed, and as a non-limiting example, it is apparent that pulverization may be performed using various types of shredding or pulverizing apparatuses, for example, an industrial pulverizer.

In one embodiment, the particle diameter of the battery shredded material may be within 50 mm, specifically within 30 mm. When the particle diameter is greater than the above range, more energy supply is required in a heat treatment step to be described below, resulting in an uneconomical problem.

In one embodiment, before the step of shredding the material serving as the base material of the battery shredded material, a pretreatment step may be further included to prevent explosion or render harmless the base material of the battery shredded material. By including the pretreatment step, a material that may explode, such as an electrolyte solution in the base material, is removed, and a base material such as a waste battery is discharged, thereby increasing safety and increasing recovery and productivity of valuable metals when the shredding step is performed.

The step of dry heat-treating the shredded material may include introducing the shredded material into a heating furnace capable of raising the shredded material to a high temperature and raising the temperature of the shredded material to a temperature equal to or higher than a melting point. The step of dry heat-treating the shredded material may involve heat treatment conditions for performing a high-temperature reduction reaction without passing through a melting step.

In one embodiment, the heat treatment conditions may involve heat treatment conditions in a range of 1,150 to 1,400°C. Specifically, the range may be performed in a range of 1,200 to 1,300°C, and more specifically 1,200 to 1,300°C. As the heat treatment is performed in the above-described temperature range, copper in the battery shredded material is melted and remains in the alloy for recovering valuable metals, thereby providing an advantage in that separation and recovery by a subsequent magnetic separation step are easy, and a reduction reaction can be performed in a state in which generation of carbon dioxide is almost absent by minimally burning carbon in the battery shredded material.

When the range is outside the upper limit, there is a problem of loss due to vaporization of lithium, and when the range is outside the lower limit, there is a problem that sintering and reduction of alloy elements do not proceed.

In one embodiment, the step of dry heat-treating the shredded material may be performed in a gas atmosphere of at least one of an inert gas, carbon dioxide, carbon monoxide, and a hydrocarbon gas. The inert gas may include, for example, at least one of argon and nitrogen. By performing the reduction reaction of the shredded material in the gas atmosphere, an alloy for recovering valuable metals including valuable metals included in the shredded material as components can be effectively recovered.

In one embodiment, a part of the gas atmosphere may include impurities including residual oxygen. When the content of oxygen among the impurities is high, oxygen may combine with components of the shredded material in a reduction reaction process to form carbon dioxide, and accordingly, there is a problem that oxygen is gasified together with lithium and is difficult to recover.

In one embodiment, in the dry heat treatment step, the content of oxygen may be 5% or less based on volume. Specifically, the content of oxygen may be 1% or less, and more specifically 0.05% or less. Specifically, when the partial pressure of oxygen is higher than the above value, there is a problem that lithium loss and a large amount of carbon dioxide occur in a local high-temperature state. When the partial pressure of oxygen is lower than the lower limit of the above range, there is a problem of a decrease in Li recovery rate due to inferior generation of LiAlO₂.

In one embodiment, the dry heat treatment step may be performed in multiple stages. Specifically, the performing in multiple stages may include a preliminary heat treatment step and a high-temperature heat treatment step. Specifically, the high-temperature heat treatment step may perform heat treatment at a temperature higher than that of the preliminary heat treatment step.

In one embodiment, the preliminary heat treatment step may be a step of preliminarily heat-treating the battery shredded material at 900°C or lower. Specifically, the preliminary heat treatment step may be a step of preliminarily heating at a temperature lower than the melting point of copper.

In one embodiment, the preliminary heat treatment step may be performed at a temperature increase rate of 5 to 15°C/min. Specifically, the preliminary heat treatment step may be 8 to 12°C/min, and more specifically, the preliminary heat treatment step may be 9 to 11°C/min.

In one embodiment, the high-temperature heat treatment step may be performed at 900°C or higher. Specifically, the high-temperature heat treatment involves a step of heating at a temperature higher than the melting point of copper, so that copper in the composition for recovering valuable metals is controlled to be partially melted and formed in the alloy for recovering valuable metals, and a carbon layer is controlled to be included in the alloy for recovering valuable metals.

In one embodiment, the temperature increase rate of the high-temperature heat treatment step may be performed at 2.5 to 7.5°C/min. Specifically, the temperature increase rate may be 3.5 to 6.5°C/min, and more specifically 4 to 6°C/min.

In one embodiment, by maintaining the temperature increase rate of the high-temperature heat treatment step lower than the temperature increase rate of the preliminary heat treatment step, copper in the composition for recovering valuable metals is controlled to be partially melted and formed in the alloy for recovering valuable metals, and a carbon layer is controlled to be included in the alloy for recovering valuable metals, so that the alloy can be controlled to be easily introduced into a subsequent process.

Through the dry heat treatment step, a composition for recovering valuable metals may be obtained, the composition including an alloy for recovering valuable metals in which components such as nickel, cobalt, manganese, and lithium-containing oxides in the shredded material are alloyed; a lithium compound disposed on at least a part of a surface of the alloy for recovering valuable metals or generated separately from the alloy for recovering valuable metals; copper; and graphite. The composition for recovering valuable metals may include, for example, aluminum (Al), manganese (Mn), lithium (Li), copper (Cu), cobalt (Co), nickel (Ni), carbon (C), and residual impurities, and a detailed description thereof is the same within a range not inconsistent with the above-described composition for recovering valuable metals.

The composition for recovering valuable metals may include a lithium compound, and the lithium compound may be manufactured by the reduction reaction. For example, the lithium compound may be lithium-aluminate (2LiAlO₂), and a reaction formula therefor is as follows.

[Reaction Formula 1] Li₂O + Al₂O₃ = 2LiAlO₂

In one embodiment, the dry heat treatment step may add a stirring process in the heat treatment furnace. The stirring process may secure promotion of a reaction in the heat treatment furnace, which is a high-temperature reduction furnace, and uniformity of internal temperature by using, for example, a rotating body or gas. The composition for recovering valuable metals may be recovered by a reduction reaction of black powder in the heat treatment furnace.

The step of recovering the valuable metal alloy from the heat-treated result may separate the heat-treated shredded material, for example, the alloy for recovering valuable metals, through magnetic separation. The magnetic separation method may use a magnetic body to separate particles through contact with the magnetic body, and various types of magnetic separation methods may be applied.

In one embodiment, the magnetic separation may be a step of magnetically separating and recovering a magnetic alloy for recovering valuable metals at a magnetic force intensity of 800 to 4,500 G. Specifically, the magnetic force intensity may be 1,000 to 4,000 G, and more specifically 2,000 to 3,000 G. When the magnetic force intensity satisfies the above-described range, the content of copper in the recovered valuable metal alloy satisfies the above-described Formulas 1 to 3, thereby improving efficiency of a subsequent wet smelting process and reducing process costs.

In one embodiment, the magnetic separation may be performed in a dry manner. Specifically, as the magnetic separation, any one of a dry drum-type magnetic separator and a dry conveyor belt-type magnetic separator may be used.

In another embodiment, the magnetic separation may be performed in a wet manner. Specifically, the magnetic separation may be performed by immersing the battery shredded material in a water tank or a batch containing a liquid material, and then performing magnetic separation with a magnet. Specifically, the wet magnetic separation may be performed under a condition in which a pulp density indicating a concentration of solids is 10 to 50%. Specifically, the pulp density may be performed at 20 to 40%. The wet magnetic separation has an advantage that separation efficiency is improved as compared with the dry magnetic separation.

In one embodiment, before the step of preparing the battery shredded material, the method may include a step of pretreating the battery. The pretreating may be a step of discharging and stabilizing the battery.

In one embodiment, the step of discharging and stabilizing the battery may be a step of performing saltwater discharging or electrical discharging. The step of discharging and stabilizing the battery may be a step of lowering and stabilizing the voltage of the battery by performing saltwater discharging or electrical discharging.

In one embodiment, the step of pretreating the battery may include freezing the battery. When the battery is directly shredded, explosion and fire may occur due to the electrolyte solution included in the battery. Specifically, as a specific pressure is applied to the battery, the separator is physically shredded, and a high current caused by occurrence of a short circuit is formed to generate sparks. Due to these sparks, the electrolyte is ignited, thereby causing fire.

In the step of freezing the battery, since a shredding process is performed after freezing the battery to suppress ignition of the liquid electrolyte included in the battery, a problem caused by ignition of the electrolyte does not occur.

In one embodiment, the step of freezing the battery may be performed by cooling in a range of -150°C to -60°C. When the temperature is outside the upper limit of the temperature range, the voltage remaining inside the battery does not decrease to 0 V, and thus a battery reaction due to a short circuit may occur, and the electrolyte is not completely frozen, which is not appropriate.

When the temperature is outside the lower limit of the temperature range, the electrolyte is sufficiently frozen, and the voltage inside the battery also decreases to 0 V. Accordingly, even if a short circuit in which the positive electrode and the negative electrode directly contact each other occurs, a battery reaction does not occur, and thus the battery temperature does not increase, so that gas generation and combustion of the electrolyte do not occur. In addition, since the electrolyte is in a frozen state, mobility of lithium ions is very low, electrical conduction characteristics caused by movement of lithium ions can be remarkably reduced, and since vaporization of the electrolyte solution does not occur, combustible gases such as ethylene, propylene, and hydrogen may not be generated.

In the step of freezing the battery, when the temperature is outside the upper limit of the temperature range, the voltage remaining inside the battery does not decrease to 0 V, and thus a battery reaction due to a short circuit may occur, and the electrolyte is not completely frozen, which is not appropriate. When the temperature is outside the lower limit of the temperature range, there is an uneconomical problem because a large amount of energy must be input for freezing.

In one embodiment, the step of freezing the battery may be performed by cooling in a temperature range of -60°C to -20°C under a vacuum atmosphere condition of 100 torr or less. The step of freezing the battery may be performed in the above temperature range, which is a temperature capable of suppressing vaporization of the electrolyte solution. The vacuum atmosphere may be, for example, an inert gas, carbon dioxide, nitrogen, water, or a combination thereof.

Since the pressure is adjusted to a vacuum atmosphere of 100 torr or less, oxygen supply can be suppressed, thereby preventing the electrolyte from reacting with oxygen, preventing explosion resulting therefrom, and suppressing vaporization of the electrolyte solution, so that combustible gases such as ethylene, propylene, and hydrogen may not be generated.

In the step of freezing the battery, when the step is performed in an air atmosphere or at a pressure exceeding 100 torr, voltage may remain in the battery, and since the electrolyte is not in a frozen state in the temperature range of -60°C to -20°C, there is a problem that the electrolyte may be vaporized and explode due to sparks generated when a short circuit occurs due to the remaining voltage.

Examples of the present invention will be described in order to describe the present invention in more detail. The following Examples are merely one embodiment of the present invention, and the present invention is not limited to the following Examples.

### <Experimental Example>

### <Example 1>

### Step of Preparing Battery

2,750 g of an NCM622 battery was prepared, and the content ratio of the NCM622 battery is shown in Table 1 below.

**[Table 1]**

| | Weight (g) | Weight (%) | Li [%] | Ni [%] | Co [%] | Mn [%] | Al [%] | Cu [%] | C [%] | Cu/Ni | Cu/Mn | Cu/C |
|---|---|---|---|---|---|---|---|---|---|---|---|---|
| NCM622 | 2750.0 | 100 | 6.04 | 32.35 | 10.73 | 9.98 | 6.07 | 10.73 | 24.50 | 33.2 | 107.5 | 44 |

### Battery Shredding Step

The waste battery is preferably shredded under air conditions or inert gas conditions using shredder equipment such that, after the waste battery is frozen at -30°C or lower and then shredded, or after the waste battery is discharged under saltwater discharging or electrical discharging conditions, the longest length among a horizontal length and a vertical length of the waste battery becomes 100 mm or less. Specifically, an NCM622 battery having an SOC of 40% or less was frozen at -70°C for 24 hours or more, and then shredded under a nitrogen atmosphere using a shredder so as to have a major axis of 100 mm or less.

### High-Temperature Heat Treatment Step

After obtaining a composition for recovering valuable metals by the above-described method, the shredded battery shredded material was heat-treated at 1,250°C under an oxygen partial pressure condition of 0.5% to perform a reduction process. At this time, as heat treatment reduction conditions, the temperature was increased from room temperature to 900°C at 10°C/min and from 900°C to 1,250°C at 5°C/min while maintaining the oxygen concentration in the furnace at 0.5% or less by purging an inert gas, and the process was performed under a condition in which introduction of the inert gas was stopped when the oxygen partial pressure in the furnace was continuously maintained at 0.5% or less. In addition, after maintaining at 1,250°C for 3 hours or more, the sample was cooled at a cooling rate of 20°C/min or more. Through the reduction process, a composition for recovering valuable metals was obtained.

FIG. 1 is an SEM photograph of a composition for recovering valuable metals according to one embodiment of the present invention.

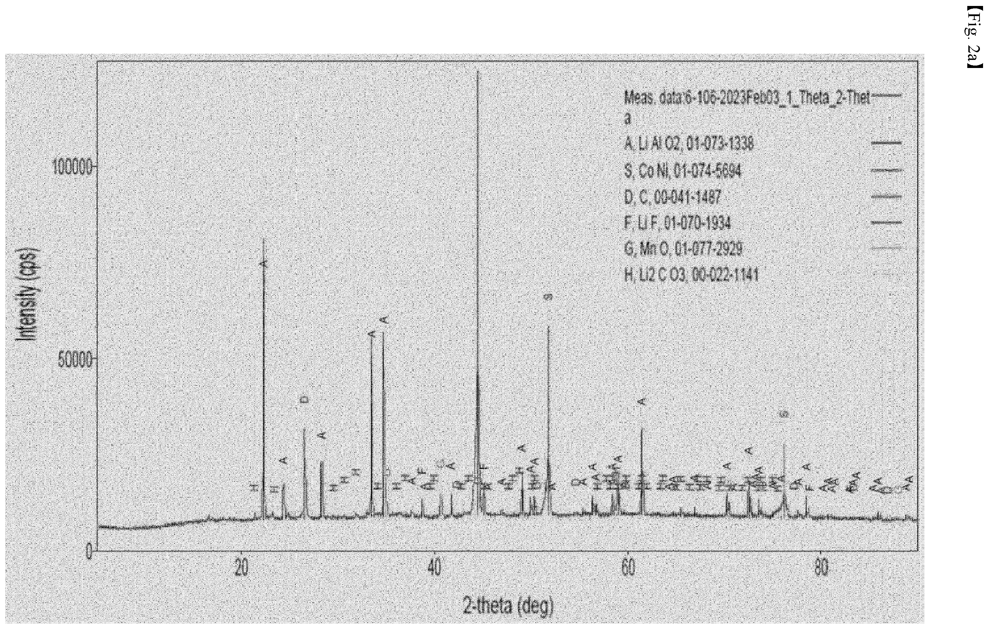

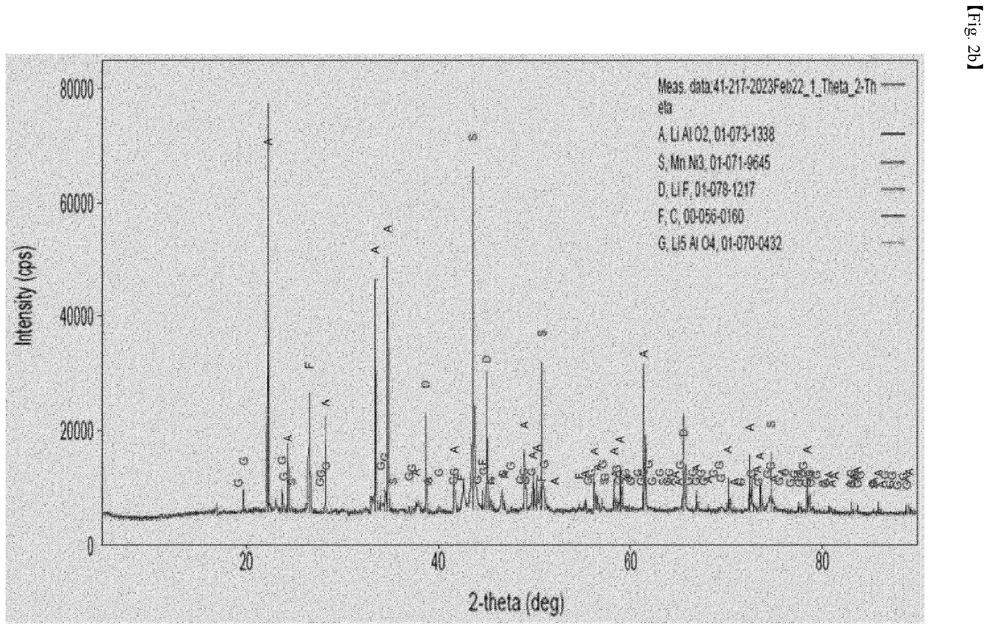

FIGS. 2A and 2B show XRD analysis results of a composition for recovering valuable metals according to one embodiment.

Referring to FIGS. 1, 2A, and 2B, it can be confirmed that, in the composition for recovering valuable metals, a lithium compound, specifically lithium oxide, is bonded and disposed on an alloy for recovering valuable metals. Such a structure may be expressed by performing the above-described reduction process.

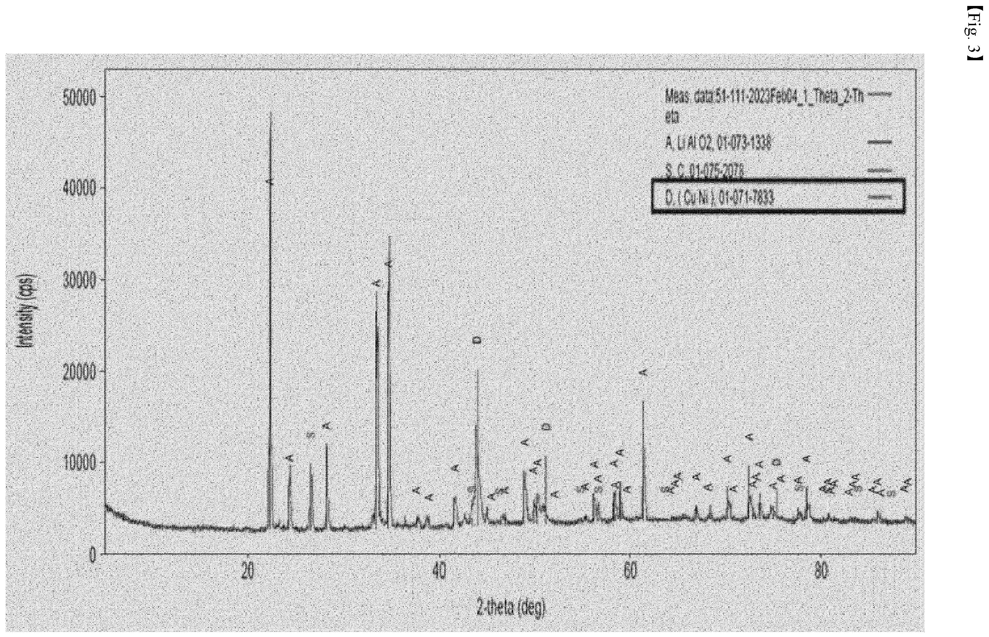

FIG. 3 shows XRD analysis results regarding a change in state of Cu in a composition for recovering valuable metals according to one embodiment.

Referring to FIG. 3, a state change of molten Cu in the composition for recovering valuable metals can be confirmed using XRD. It can be confirmed that Cu melted in the reducing atmosphere of the present invention chemically bonds by reacting with Ni. This means that the molten Cu is melted into and remains in the NCM alloy, and that the content of Cu melted into the NCM alloy is controlled by the reduction temperature.

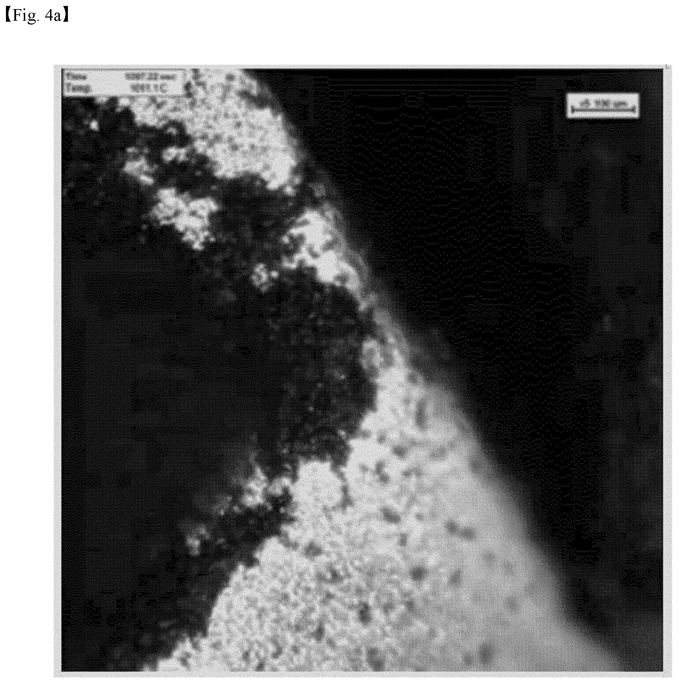

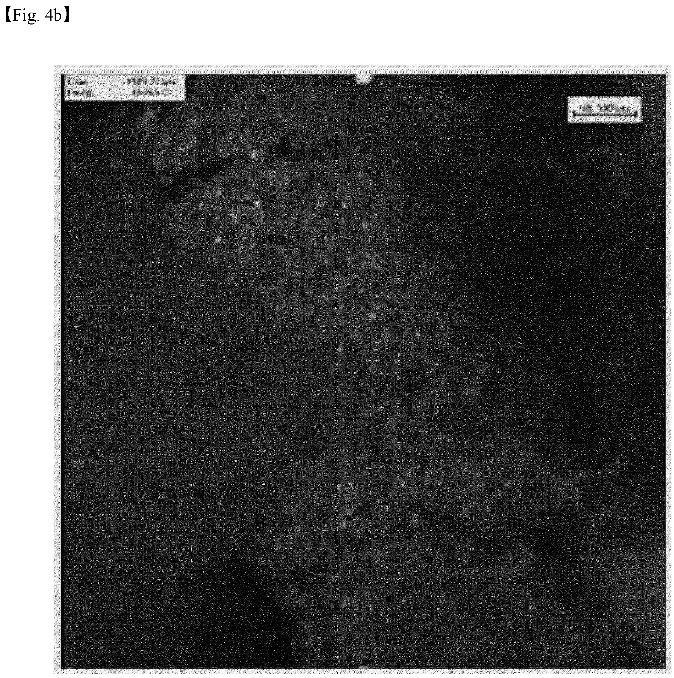

FIGS. 4A and 4B show a melting process of copper foil (Cu foil) in the heat treatment step of the battery shredded material of the present invention.

FIG. 4A shows a state before the copper foil (Cu foil) is melted, and FIG. 4B shows a state after the copper foil is melted. Referring to FIGS. 4A and 4B, it can be confirmed that copper is melted at 1,050°C, and it can be confirmed that the bright-colored copper portion of FIG. 4A has all disappeared in FIG. 4B.

Example 1 and Comparative Examples 1 to 3 are experimental results for reactants subjected to high-temperature reduction under high-temperature heat treatment temperature conditions in a range of 900 to 1500°C in an atmosphere having an oxygen concentration of 0.5% or less.

Regarding the high-temperature reduction reactant, a reactant having a size of 100 µm or less was separately separated using a 100 µm sieve because the reactant mostly had carbon and metallic Cu as main components, and a reactant larger than 100 µm was separated into a magnetic product and a non-magnetic product using a magnetic separator having a magnetic force intensity of 3000 G, and then components and ratios of the components were analyzed. Fine powder having a size smaller than 100 µm was analyzed to have a C content of 79.2%, an Li content of 1% or less, an Ni content of 3% or less, and Co and Mn contents of 2% or less.

### <Comparative Example 1>

The same process as in Example 1 was performed, except that the high-temperature heat treatment step was performed at 1,100°C.

### <Comparative Example 2>

The same process as in Example 1 was performed, except that the high-temperature heat treatment step was performed at 1,500°C.

### <Comparative Example 3>

The same process as in Example 1 was performed, except that heat treatment was performed at 900°C in the high-temperature heat treatment step.

### <Evaluation Example 1> - Evaluation of Components of Composition for Recovering Valuable Metals

Table 2 below shows components when a composition for recovering valuable metals manufactured according to the high-temperature heat treatment process was magnetically separated.

The following components were measured using ICP-OES and a C/S analyzer.

**[Table 2]**

| | Particl e Size (µm) | Li [wt%] | Ni [wt%] | Co [wt%] | Mn [wt%] | Al [wt%] | Cu [wt%] | C [wt%] | Cu/Ni [%] | Cu/Mn [%] | Cu/C [%] |
|---|---|---|---|---|---|---|---|---|---|---|---|
| Example 1 (1250°C) | Magne tic | 5.73 | 32.50 | 14.07 | 9.95 | 9.12 | 4.08 | 3.45 | 12.6 | 41.0 | 118 |
| | Non-magnet ic | 5.67 | 0.92 | 0.32 | 1.79 | 6.69 | 35.40 | 21.73 | 3847.8 | 1977.7 | 163 |
| Comparative Example 1 (1100°C) | Magne tic | 5.64 | 28.30 | 11.01 | 9.52 | 12.67 | 7.81 | 5.57 | 27.6 | 82.0 | 140 |
| | Non-magnet ic | 1.24 | 3.57 | 1.48 | 1.16 | 1.11 | 3.52 | 79.20 | 98.6 | 303.4 | 4 |
| Comparative | Magnetic | 0.37 | 51.90 | 16.50 | 3.10 | 1.29 | 0.10 | 3.68 | 0.2 | 3.2 | 2.7 |
| Example 2 (1500°C) | Non-magnet ic | 1.80 | 0.46 | 0.07 | 12.40 | 4.17 | 0.01 | 0.12 | 2.2 | 0.1 | 8.3 |
| Comparative Example 3 (900°C) | Magne tic | 1.17 | 29.45 | 10.71 | 9.59 | 1.42 | 0.51 | 3.10 | 1.7 | 5.3 | 16.5 |
| | Non-magnet ic | 6.03 | 25.53 | 11.34 | 8.01 | 10.45 | 10.65 | 6.58 | 41.7 | 133.0 | 161.9 |

Referring to the Example in Table 2, compared with the component ratio of the NCM622 battery in Table 1, it can be seen that the Cu/Ni, Cu/Mn, and Cu/C content ratios are consumed as oxygen and carbon of NCM, which is a positive electrode material, react in the high-temperature reduction process and are converted into CO and CO₂ gases, and the Cu/C content ratio of the magnetic product rapidly increases from 44% to 118% due to the carbon and partially combusted carbon, and the non-magnetic product also increases to 16.%. The Cu/Ni ratio and Cu/Mn ratio of the magnetic product decreased by about half to 12.6% and 41.0%, respectively, compared with Table 1, because the NCM oxide, which is the positive electrode material, was reduced to metal and mostly separated as a magnetic product. Therefore, the Cu/Ni ratio and Cu/Mn ratio of the non-magnetic product increase to thousands of %. Comparative Example 1 is a result of magnetic separation of a material reacted at 1,100°C, which is slightly higher than 1,050°C at which Cu is melted during the high-temperature reduction reaction process, and it can be seen that the wt% of the valuable metals recovered as a magnetic product is somewhat lower than that of Example 1. This is because the reaction rate of the reduction reaction has high temperature dependence, increasing as the temperature increases, and therefore the positive electrode material was not completely reduced compared with Example 1 and remains in an oxide form.

Comparative Example 2 was reacted at a high temperature of 1,500°C, and most of the carbon was combusted and did not remain in the magnetic product and the non-magnetic product. In addition, because the reaction was performed at a temperature higher than the melting point of NCM and higher than the volatilization temperature of Li, most of the NCM was reduced and then melted and discharged in the form of molten iron, and the wt% of NCM in the magnetic product was shown to be the highest. However, most of Li was volatilized and could not be recovered as the magnetic product, and could be recovered only in a trace amount as a non-magnetic product in the form of slag.

Comparative Example 3 is obtained by reacting at 900°C, which is lower than 1,050°C, the melting point of Cu, and then separating magnetic and non-magnetic products. In general, a reduction reaction by carbon actively occurs when the temperature is thermodynamically higher than the temperature at which the Boudouard reaction occurs. Since Comparative Example 3 has a temperature level similar to the Boudouard reaction temperature, some of the positive electrode material is reduced and recovered as a magnetic product, but only at a significantly lower level than that of Example 1. Therefore, the Cu/Ni ratio, Cu/Mn ratio, and Cu/C ratio appear very low compared with the Example. Eventually, the temperature of the high-temperature reduction reaction should be performed in an intermediate temperature range higher than 1100°C and lower than 1500°C.

### <Evaluation Example 2> - Evaluation of Components of Valuable Metal Alloy / Evaluation of Components of Composition for Recovering Valuable Metals

The results are obtained by magnetically separating a reactant manufactured at a high-temperature reduction reaction temperature of 1,300°C in the dry heat treatment step, and at this time, components of magnetic products according to magnetic force intensity and ratios of the respective components were compared.

### <Example 2>

A composition for recovering valuable metals was manufactured in the same manner as in Example 1, except that, in the dry heat treatment step, the high-temperature reduction reaction temperature was set to 1,300°C. Thereafter, the manufactured composition for recovering valuable metals was magnetically separated at a magnetic force intensity of 1,000 G to recover a magnetic material.

### <Example 3>

The same process as in Example 2 was performed, except that the composition for recovering valuable metals was magnetically separated at a magnetic force intensity of 2,000 G to recover a magnetic material.

### <Example 4>

The same process as in Example 2 was performed, except that the composition for recovering valuable metals was magnetically separated at a magnetic force intensity of 3,000 G to recover a magnetic material.

### <Comparative Example 4>

The same process as in Example 2 was performed, except that the composition for recovering valuable metals was magnetically separated at a magnetic force intensity of 500 G to recover a magnetic material.

### <Comparative Example 5>

The same process as in Example 2 was performed, except that the composition for recovering valuable metals was magnetically separated at a magnetic force intensity of 5,000 G to recover a magnetic material.

Table 3 below shows components of magnetic materials and non-magnetic materials, which are alloys for recovering valuable metals, when the composition for recovering valuable metals was magnetically separated according to magnetic force intensity. At this time, the magnetic separation method was performed by the following method.

Magnetic separation method: A beneficiation experiment was performed according to each magnetic force intensity using a magnetic separator, which is a drum-type wet magnetic separation apparatus manufactured by Dae Bo Magnetic Co., Ltd.

**[Table 3]**

| | Clas sific ation | Li [wt%] | Ni [wt%] | Co [wt%] | Mn [wt%] | Al [wt%] | Cu [wt%] | C [wt%] | Cu/Ni [%] | Cu/Mn [%] | Cu/C [%] |
|---|---|---|---|---|---|---|---|---|---|---|---|
| Example 2 (1000G) | Mag netic Mat erial | 5.64 | 35.50 | 15.70 | 10.50 | 8.41 | 4.23 | 3.18 | 11.9 | 40.3 | 133 |
| | Non - Mag netic Mat erial | 7.72 | 1.29 | 0.56 | 1.74 | 13.20 | 27.90 | 17.70 | 2162.8 | 1603.4 | 158 |
| Example 3 (2000G) | Mag netic Mat erial | 5.86 | 31.60 | 14.00 | 9.28 | 9.51 | 4.21 | 2.96 | 13.3 | 45.4 | 142 |
| | Non - Mag netic Material | 6.43 | 1.19 | 0.50 | 1.85 | 10.50 | 34.80 | 16.50 | 2924.4 | 1881.1 | 211 |
| Example 4 (3000G) | Mag netic Mat erial | 5.09 | 32.90 | 14.50 | 9.54 | 8.49 | 4.15 | 3.84 | 12.6 | 43.5 | 108 |
| | Non - Mag netic Mat erial | 6.87 | 0.82 | 0.35 | 1.94 | 10.20 | 34.50 | 19.30 | 4207.3 | 1778.4 | 179 |
| Comparative Example 4 (500G) | Mag netic Mat erial | 6.63 | 32.20 | 14.30 | 9.73 | 9.38 | 5.82 | 2.75 | 18.1 | 59.8 | 212 |
| | Non - Mag netic Mat erial | 8.66 | 1.45 | 0.64 | 1.78 | 14.30 | 28.10 | 20.40 | 1937.9 | 1578.7 | 138 |
| Comparative Example 5 (5000G) | Mag netic Mat erial | 5.92 | 31.70 | 14.07 | 9.46 | 9.47 | 3.92 | 5.64 | 12.4 | 41.4 | 70.0 |
| | Non - Mag netic Mat erial | 5.67 | 0.38 | 0.27 | 2.07 | 8.06 | 40.74 | 13.2 | 1,072.1 | 1,968.1 | 309 |

Referring to Table 3, in the range of a magnetic force intensity of 1000 to 3000 G in the Examples, changes occur in a narrow range in which the Cu/Ni ratio of the magnetic product is 10 to 15%, the Cu/Mn ratio is 40 to 50%, and the Cu/C ratio is 100 to 150%. However, in the Comparative Example having a low magnetic force intensity of 500 G, it can be seen that the Cu/Ni ratio of the magnetic product rapidly increased to 18.1%, the Cu/Mn ratio rapidly increased to 59.8%, and the Cu/C ratio rapidly increased to 212%. In addition, it can be seen that a considerable amount of Li and NCM valuable metals remained in the non-magnetic product at 500 G and could not be recovered as the magnetic product. Comparative Example 5 is an experimental result for a very strong magnetic force intensity of 5000 G. The Cu/Ni ratio and Cu/Mn ratio are similar to the ratio ranges of the Examples, but non-magnetic carbon is recovered as a magnetic product, so that the Cu/C ratio increases to 70%, which is considerably reduced compared with the range of the Examples. This shows that, when the magnetic force intensity is excessively stronger than the range suggested in the present invention during magnetic separation, even non-magnetic materials are recovered as a magnetic product, thereby reducing the effect of the purpose of separating valuable metals and carbon by performing magnetic separation.

The present invention is not limited to the above embodiments and may be manufactured in various different forms. A person having ordinary skill in the art to which the present invention pertains will understand that the present invention may be embodied in other specific forms without changing the technical spirit or essential features of the present invention. Therefore, the above-described embodiments should be understood as illustrative in all respects and not restrictive.

## Claims

1. An alloy for recovering valuable metals, comprising:
based on 100 wt% of an entire composition of the alloy,
valuable metals in an amount of 45 wt% or more and impurities as a balance,
wherein the alloy satisfies the following Formula 1: <Formula 1> $5.0 \leq \left[Cu\right] / \left[Ni\right] \leq 15.0 %$
wherein, in Formula 1, [Cu] and [Ni] mean contents of Cu and Ni in the alloy for recovering valuable metals, respectively.

2. The alloy for recovering valuable metals of claim 1,
wherein the alloy satisfies the following Formula 2: <Formula 2> $30.0 \leq \left[Cu\right] / \left[Mn\right] \leq 55.0 %$
wherein, in Formula 2, [Cu] and [Mn] mean contents of Cu and Mn in the alloy for recovering valuable metals, respectively.

3. The alloy for recovering valuable metals of claim 1,
wherein the alloy satisfies the following Formula 3: <Formula 3> $50.0 \leq \left[Cu\right] / \left[C\right] \leq 200.0 %$
wherein, in Formula 3, [Cu] and [C] mean contents of Cu and C in the alloy for recovering valuable metals, respectively.

4. The alloy for recovering valuable metals of claim 1,
wherein the alloy comprises a CuNi alloy.

5. The alloy for recovering valuable metals of claim 1,
wherein XRD peak values include at least one diffraction peak among 2θ = 44°±1°, 2θ = 51.5°±1.5°, and 2θ = 75.5°±1.5°.

6. The alloy for recovering valuable metals of claim 1,
wherein the alloy comprises copper (Cu) having a content of 0.02 to 5.00 wt% or less based on 100 wt% of the alloy for recovering valuable metals.

7. The alloy for recovering valuable metals of claim 1,
wherein the alloy comprises carbon (C) having a content of 5.0 wt% or less based on 100 wt% of the alloy for recovering valuable metals.

8. A method for recovering valuable metals, comprising:
preparing a battery in a cell unit or battery shredded material;
performing dry heat treatment in a temperature range of 1,150 to 1,400°C without passing through a melting step of the battery or the shredded material; and
magnetically separating and recovering, from the dry heat-treated result, a magnetic alloy for recovering valuable metals at a magnetic force intensity of 800 to 4,500 G.

9. The method for recovering valuable metals of claim 8,
wherein the dry heat treatment is performed in an atmosphere having an oxygen content of 5% or less.

10. The method for recovering valuable metals of claim 8,
wherein the dry heat treatment comprises performing the dry heat treatment in multiple stages, and
wherein the performing in multiple stages comprises a preliminary heat treatment step and a high-temperature heat treatment step performed at a temperature higher than that of the preliminary heat treatment step.

11. The method for recovering valuable metals of claim 8,
wherein the preliminary heat treatment step is performed at a temperature of 900°C or lower, and
wherein a temperature increase rate of the preliminary heat treatment step is 5 to 15°C/min.

12. The method for recovering valuable metals of claim 8,
wherein the high-temperature heat treatment step is performed at 900°C or higher, and
wherein a temperature increase rate of the high-temperature heat treatment step is 2.5 to 7.5°C/min.

13. The method for recovering valuable metals of claim 8,
further comprising, after the high-temperature heat treatment step, a cooling step,
wherein the cooling step is performed at a cooling rate of 20°C/min or higher, and
wherein the high-temperature heat treatment step is performed at 900°C or higher.

14. The method for recovering valuable metals of claim 8,
wherein the magnetically separating and recovering the alloy for recovering valuable metals is performed in a wet manner.

15. The method for recovering valuable metals of claim 8,
wherein the magnetically separating and recovering the alloy for recovering valuable metals is performed in a range in which a pulp density indicating a concentration of solids is 10 to 50%.

16. The method for recovering valuable metals of claim 8,
wherein a lithium compound bonded to a part of a surface of the alloy for recovering valuable metals is separated by external force from the result obtained from the dry heat treatment.

17. The method for recovering valuable metals of claim 8,
wherein the preparing of the battery in a cell unit or the battery shredded material comprises pretreating the battery in a cell unit or the battery shredded material.
